(19) Europäisches Patentamt

European Patent Office

Office européen des brevets

(11) **EP 3 291 543 A1**

(12) **EUROPEAN PATENT APPLICATION**

(43) Date of publication:
**07.03.2018 Bulletin 2018/10**

(51) Int Cl.:
**H04N 7/18** (2006.01)  **G06T 3/00** (2006.01)
**G06T 5/00** (2006.01)  **H04N 5/217** (2011.01)

(21) Application number: **17186798.9**

(22) Date of filing: **18.08.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **31.08.2016 JP 2016169591**

(71) Applicants:
• **AISIN SEIKI KABUSHIKI KAISHA
Kariya-shi Aichi 448-8650 (JP)**

• **HONDA MOTOR CO., LTD.
Tokyo 107-8556 (JP)**

(72) Inventors:
• **AOKI, Jun
Kariya-shi, Aichi 448-8650 (JP)**
• **TORII, Masanori
Kariya-shi, Aichi 448-8650 (JP)**
• **YAMANAKA, Hiroshi
Wako-shi, Saitama 351-0193 (JP)**

(74) Representative: **TBK
Bavariaring 4-6
80336 München (DE)**

(54) **DISPLAY CONTROL DEVICE**

(57) According to one embodiment, a display control device (11) includes an image acquirer (111) that acquires captured image data output from an imager (12) that captures an image of a surrounding of a vehicle (1), and a display processor (113) that displays an image of the captured image data, the image being transformed so that a corner image is moved to outside of a display region at a ratio greater than that of an image of another part, on a display (24a).

FIG.1

**Description**

FIELD

An embodiment described herein relate generally to a display control device.

BACKGROUND

Conventionally, a technology of correcting distortion of an image captured by a wide angle lens, a fisheye lens, or the like by using a distortion correction parameter has been known.
Japanese Laid-open Patent Publication No. 2008-225522

SUMMARY

For example, there is a situation when a part of a vehicle body (such as a garnish) is included in the corner (a part or all of four corners) of a surrounding image of the vehicle, and a user wishes to reduce the ratio of the part of the vehicle body in the image for a desirable appearance. In such a case, when distortion correction is performed on the image by using the distortion correction parameter described above, the ratio of the part of the vehicle body in the image may not be effectively reduced, even though the image may look closer to reality.

It is easy to trim the image to reduce a part of the vehicle body from the image. However, simply trimming the image in this manner is not preferable because significant information such as other vehicles and pedestrians on the road is likely to be eliminated from the image.

Consequently, one of the objects of the present invention is to improve the appearance of the surrounding image of the vehicle while retaining significant information as much as possible.

According to one embodiment, a display control device comprising: an image acquirer that acquires captured image data output from an imager that captures an image of a surrounding of a vehicle; and a display processor that displays an image of the captured image data that is transformed so that a corner image of a display region of the captured image data is moved to outside of the display region at a ratio greater than that of an image of another part of the display region of the captured image data, on a display. With the configuration, for example, it is possible to improve the appearance of a surrounding image of a vehicle while retaining significant information as much as possible, by displaying an image in which corner images that are likely to include a part of a vehicle body are moved to the outside of a display region at a ratio greater than that of the images of other parts that are likely to include significant information.

In the above display control device, for example, the display processor displays, on the display, an image of an upper side image of the display region of the captured image data, the upper side image being transformed so that the corner image of the display region is moved to the outside of the display region at a ratio greater than that of the image of the other part of the display region, and an image of a lower side image of the display region of the captured image data, the lower side image being transformed so that the corner image of the display region is moved to the outside of the display region at a ratio greater than that of the image of the other part of the display region, and the corner image of the display region is moved to the outside of the display region at a ratio different from that of the upper side image. With the configuration, for example, it is possible to flexibly correspond to a situation when the size of a part of the vehicle body in an actual image that a user desires to reduce is different between an upper side image and a lower side image, by displaying an image in which the corner images are moved to the outside of the display region at different ratios between the upper side image and the lower side image.

In the above display control device, for example, when the captured image data is to be processed on a coordinate plane in which a predetermined reference point is an origin, and a horizontal direction and a vertical direction relative to a captured image of the surrounding of the vehicle are respectively an x-axis and a y-axis, the display processor displays, on the display, an image of an upper side image indicating a region above the origin in the captured image data, the upper side image being transformed so that a plurality of pixels having same y coordinate are moved in such a manner that the y coordinate moves away from the origin as an x coordinate is separated from the origin, and an image of a lower side image indicating a region below the origin in the captured image data, the lower side image being transformed so that the pixels having the same y coordinate are moved in such a manner that the y coordinate moves away from the origin as the x coordinate is separated from the origin. With the configuration, for example, it is possible to display an image in which the corner images are effectively moved to the outside of the display region, while preventing the changes in appearance of the image due to the transformation as much as possible.

In the above display control device, for example, the display processor displays an image of the captured image data, the captured image being transformed so that the corner image of the display region of the upper side image is moved to the outside of the display region at a ratio greater than that of the corner image of the display region of the lower side image, on the display. With the configuration, for example, it is possible to display a suitable image, by displaying an image in which the corner images of the upper side image that are likely to include less significant information such as the sky and upper floors of buildings are largely moved to the outside of the display region, and the corner images of the lower side image that are likely to include significant information such as other vehicles and pedestrians on the road are not largely moved to the outside of the display region as the upper side image.

BRIEF DESCRIPTION OF THE DRAWINGS

FIG. 1 is a schematic configuration diagram illustrating an example of a display control system of an embodiment;

FIG. 2 is a plan view illustrating an example of an imaging range of an imager in the display control system of the embodiment;

FIG. 3 is a side view illustrating an example of the imaging range of the imager in the display control system of the embodiment;

FIG. 4 is a block configuration diagram illustrating an example of an ECU included in the display control system of the embodiment;

FIG. 5 is a diagram illustrating an example of an image displayed by the display control system of the embodiment;

FIG. 6 is a diagram illustrating an upper side region and a lower side region when a captured image is handled in the embodiment;

FIG. 7 is a diagram illustrating an example of an image before transformation processing is performed in the embodiment;

FIG. 8 is a diagram illustrating an example of an image after the transformation processing is performed in the embodiment; and

FIG. 9 is a flowchart illustrating an example of a process performed by the display control system of the embodiment.

DETAILED DESCRIPTION

Hereinafter, an exemplary embodiment of the present invention will be described. The structure of the embodiment described below, operations, results, and effects provided by the structure are merely examples. The present invention can be achieved by the structure other than that disclosed in the following embodiment. Moreover, with the present invention, it is possible to obtain at least one of various effects and derivative effects achieved by the structure.

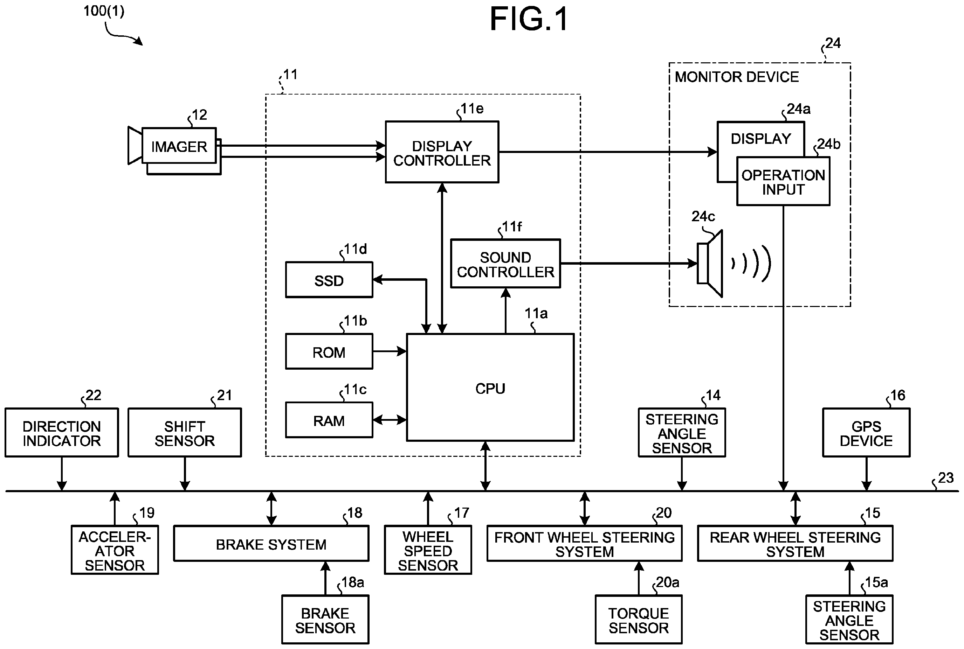

As illustrated in FIG. 1, a display control system 100 mounted on a vehicle 1 includes an imager 12 and an electronic control unit (ECU) 11.

For example, the imager 12 is a digital camera incorporating an imaging element such as a charge coupled device (CCD), a complementary metal-oxide-semiconductor (CMOS) image sensor (CIS) and the like. The imager 12 can output image data, in other words, moving picture data at a predetermined frame rate.

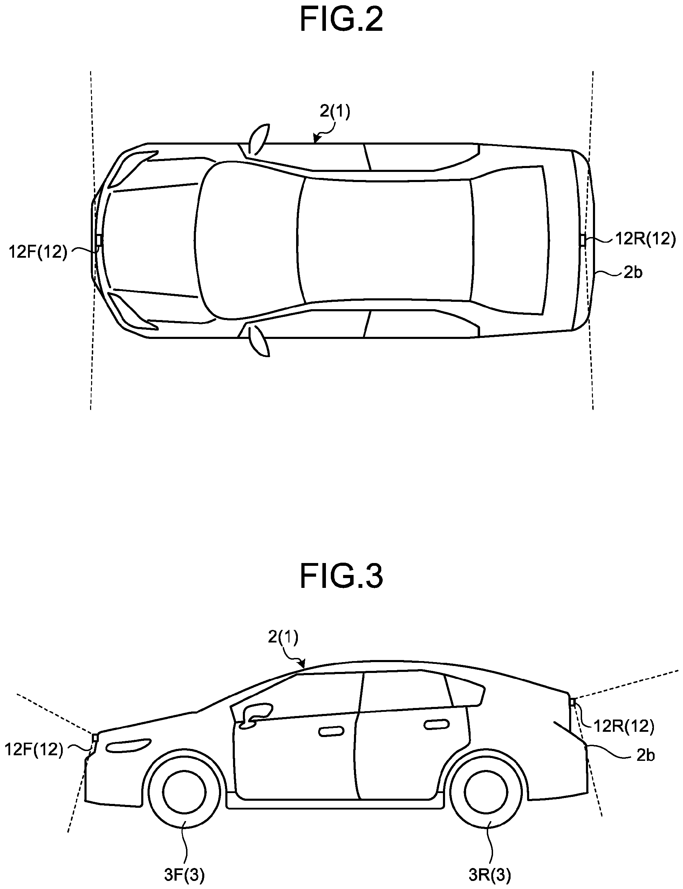

In the examples in FIG. 2 and FIG. 3, a vehicle body 2 includes an imager 12R provided in the rear of the vehicle body 2 and an imager 12F provided in the front of the vehicle body 2, as the imager 12 that captures images of the surroundings of the vehicle 1. The imager 12R captures images of the rear of the vehicle 1. For example, the imager 12R includes a wide angle lens or a fisheye lens. For example, the broken lines in FIG. 2 and FIG. 3 illustrate the imaging range of the imager 12R. As illustrated in FIG. 3, the imaging range of the imager 12R is preferably a range that includes at least a direction toward which a rear end portion 2b of the vehicle body 2 is displayed to the upper portion of the rear of the vehicle 1 above the horizontal direction. In this manner, it is possible to acquire an image of the rear of the vehicle while the vehicle is traveling as well as an image close to the road surface of the rear of the vehicle while the vehicle is parking, from the images captured by the imager 12R.

The imager 12F captures images of the front of the vehicle 1. For example, the imager 12F includes a wide angle lens or a fisheye lens. For example, the broken lines in FIG. 2 and FIG. 3 illustrate the imaging range of the imager 12F. Hereinafter, an image captured by the imager 12R will be mainly described as an example. It is to be noted that the imaging ranges illustrated in FIG. 2 and FIG. 3 are merely examples, and it is not limited thereto.

Returning to FIG. 1, for example, electrical components included in the display control system 100 are electrically or communicably connected via an in-vehicle network 23. For example, the electrical components include a steering angle sensor 14, a rear wheel steering system 15, a steering angle sensor 15a, a global positioning system (GPS) device 16, a wheel speed sensor 17, a brake sensor 18a, an accelerator sensor 19, a front wheel steering system 20, a torque sensor 20a, a shift sensor 21, a direction indicator 22, an operation input 24b, and the like. For example, the in-vehicle network 23 is a controller area network (CAN). It is to be noted that the electrical components may also be electrically or communicably connected via a network other than the CAN.

The steering angle sensor 14 is a sensor that detects the steering amount of a steering wheel, which is not illustrated, as a steering unit. For example, the steering angle sensor 14 includes a hall element and the like. The steering angle sensor 15a is a sensor that detects the steering amount of a rear vehicle wheel 3R, and that outputs the steering amount to the rear wheel steering system 15. For example, the steering angle sensor 15a includes a hall element and the like. For example, the steering amount is detected as a rotation angle.

The wheel speed sensor 17 is a sensor that detects the amount of rotation of a vehicle wheel 3 (3F and 3R) and the rotation speed of the vehicle wheel 3 (3F and 3R) per unit time. For example, the wheel speed sensor 17 includes a hall element and the like.

A brake system 18 is an anti-lock brake system (ABS) for preventing a brake from locking, an electronic stability control (ESC) for preventing the vehicle 1 from side-slipping while the vehicle 1 is cornering, an electric braking system for increasing the braking force, brake by wire (BBW), and the like. The brake system 18 applies braking force to the vehicle wheel 3 via an actuator, which is not illustrated, and reduces the speed of the vehicle 1. For example, the brake sensor 18a is a sensor that detects the operation amount of a brake pedal.

The accelerator sensor 19 is a sensor that detects the operation amount of an accelerator pedal. The torque sensor 20a detects torque applied to the steering unit by the driver, and outputs the torque to the front wheel steering system 20. For example, the shift sensor 21 is a sensor that detects the position of a movable part of a transmission unit, and includes a displacement sensor and the like. For example, the movable part is a lever, an arm, a button, and the like. The configurations, arrangements, electrical connection forms, and the like of various sensors and the actuator described above are merely examples, and may be set or changed in various ways. The direction indicator 22 outputs a signal that indicates whether the direction indicator light is turned on, turned off, flickering, or the like.

A display 24a and a sound output device 24c are also provided inside the vehicle. For example, the display 24a is a liquid crystal display (LCD), an organic electroluminescent display (OELD), and the like. For example, the sound output device 24c is a speaker. Moreover, the display 24a is covered by the transparent operation input 24b. For example, the operation input 24b is a touch panel and the like. The occupant and the like can view an image displayed on a display screen of the display 24a via the operation input 24b. Moreover, the occupant and the like can operate the operation input 24b by performing an input operation of touching, pushing, or moving the operation input 24b with hands or fingers, at a position corresponding to an image displayed on the display screen of the display 24a. For example, the display 24a, the operation input 24b, the sound output device 24c, and the like are provided on a monitor device 24 that is placed at the center portion of a dashboard in the vehicle width direction, in other words, in the horizontal direction. For example, the monitor device 24 may also include operation inputs such as a switch, a dial, a joystick, and a push button, which are not illustrated. For example, the monitor device 24 is also used as a navigation system and an audio system.

For example, the ECU 11 includes a central processing unit (CPU) 11a, a read only memory (ROM) 11b, a random access memory (RAM) 11c, a solid state drive (SSD) 11d, a display controller 11e, a sound controller 11f, and the like. The SSD 11d may be a flash memory. The CPU 11a can perform various operations. The CPU 11a can read out a computer program installed and stored in a non-volatile storage device such as the ROM 11b and the SSD 11d, and perform operation processing according to the computer program. The RAM 11c temporarily stores therein various types of data used for the operation performed by the CPU 11a. Moreover, the SSD 11d is a rewritable non-volatile storage unit, and can store data even if the power of the ECU 11 is turned off.

The display controller 11e mainly performs image processing using image data obtained by the imager 12, image processing on image data displayed on the display 24a, and the like, in the operation processing in the ECU 11. Moreover, the sound controller 11f mainly performs processing on sound data output from the sound output device 24c, in the operation processing in the ECU 11. The CPU 11a, the ROM 11b, the RAM 11c, and the like may be integrated into the same package. The ECU 11 may also use another logical operation processor such as a digital signal processor (DSP), and a logical circuit, instead of the CPU 11a. Moreover, a hard disk drive (HDD) may be provided instead of the SSD 11d, or the SSD 11d and the HDD may be provided separate from the ECU 11.

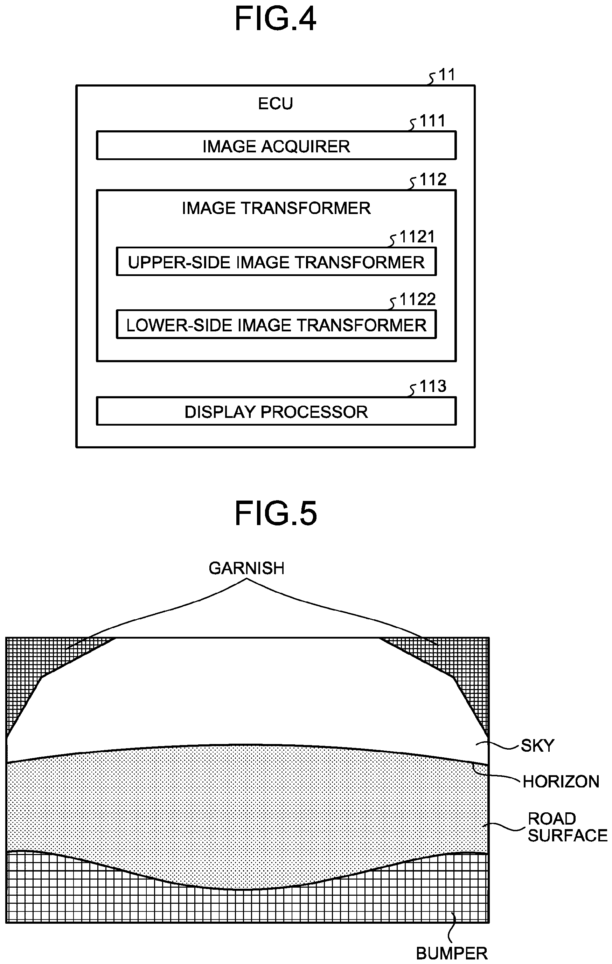

For example, in the present embodiment, the ECU 11 functions at least as a part of a display control device, by the cooperation of hardware and software (computer program). In other words, in the present embodiment, for example, as illustrated in FIG. 4, the ECU 11 not only functions as the display controller 11e and the sound controller 11f illustrated in FIG. 1, but also functions as an image acquirer 111, an image transformer 112, a display processor 113, and the like.

The image acquirer 111 acquires captured image data output from the imager 12 that captures images of the surroundings of the vehicle 1.

The image transformer 112 performs transformation processing on the captured image data acquired by the image acquirer 111, by moving the corner images to the outside of a display region, at a ratio greater than that of the images of other parts. The image transformer 112 includes an upper-side image transformer 1121 and a lower-side image transformer 1122.

The upper-side image transformer 1121 performs transformation processing on the upper side image in the captured image data, by moving the corner images to the outside of the display region, at a ratio greater than that of the images of other parts. The lower-side image transformer 1122 performs transformation processing on the lower side image in the captured image data, by moving the corner images to the outside of the display region, at a ratio greater than that of the images of other parts, as well as moving the corner images to the outside of the display region, at a ratio different from that of the upper side image (for example, at a ratio smaller than that of the upper side image).

It is assumed that the captured image data is to be processed on a coordinate plane in which a predetermined reference point is the origin, and the horizontal direction and the vertical direction relative to the captured image of the surroundings of the vehicle 1 are respectively an x-axis and a y-axis. In this case, the upper-side image transformer 1121 performs transformation processing on the upper side image that is indicating the region above the origin in the captured image data, by moving a plurality of pixels having the same y coordinate in such a manner that the y coordinate moves away from the origin as the x coordinate is separated from the origin. The lower-side image transformer 1122 performs transformation processing on the lower side image that is indicating the region below the origin in the captured image data, by moving the pixels having the same y coordinate in such a manner that the y coordinate moves away from the origin as the x coordinate is separated from the origin.

The display processor 113 displays an image of the captured image data that is transformed by the image transformer 112, on the display 24a. For example, the display processor 113 displays an image of the captured image data that is transformed so that the corner images are moved to the outside of the display region at a ratio greater than that of the images of other parts, on the display 24a.

Moreover, the display processor 113 displays an image of the upper side image in the captured image data that is transformed by the upper-side image transformer 1121 so that the corner images are moved to the outside of the display region at a ratio greater than that of the images of other parts, on the display 24a. The display processor 113 also displays an image of the lower side image in the captured image data that is transformed by the lower-side image transformer 1122 so that the corner images are moved to the outside of the display region at a ratio greater than that of the images of other parts, as well as that the corner images are moved to the outside of the display region at a ratio different from that of the upper side image, on the display 24a.

Furthermore, the display processor 113 displays an image of the upper side image indicating the region above the origin in the captured image data that is transformed by the upper-side image transformer 1121 so that the pixels having the same y coordinate are moved in such a manner that the y coordinate moves away from the origin as the x coordinate is separated from the origin, on the display 24a. The display processor 113 also displays an image of the lower side image indicating the region below the origin in the captured image data that is transformed by the lower-side image transformer 1122 so that the pixels having the same y coordinate are moved in such a manner that the y coordinate moves away from the origin as the x coordinate is separated from the origin, on the display 24a.

Next, an example of an image to be displayed on the display 24a will be described. As illustrated in FIG. 5, a bumper (rear end portion 2b in FIG. 3) is displayed in the lower side of the display image. The road surface is displayed above the bumper. The sky is displayed above the road surface. The horizon is displayed between the road surface and the sky. Moreover, garnishes are displayed at the right upper corner and the left upper corner.

In this example, to improve the appearance of the display image, a user wishes to reduce the portion of the garnishes. The garnishes may be totally removed from the display image. Significant information such as other vehicles and pedestrians is likely to be displayed on the road surface portion. Thus, even if the road surface portion is to be reduced, it is not preferable to reduce a large amount of the road surface portion.

Significant information such as other vehicles and pedestrians is likely to be displayed on the lower portion of the sky. However, significant information is not likely to be displayed on the upper portion of the sky. Thus, it is not preferable to reduce a large amount of the lower portion of the sky, but there is no problem in reducing the upper portion of the sky. Moreover, it is not preferable to completely eliminate the bumper portion because it will be difficult to achieve a sense of distance to the road surface. However, there is no problem in reducing the bumper portion with a part of the bumper portion retained.

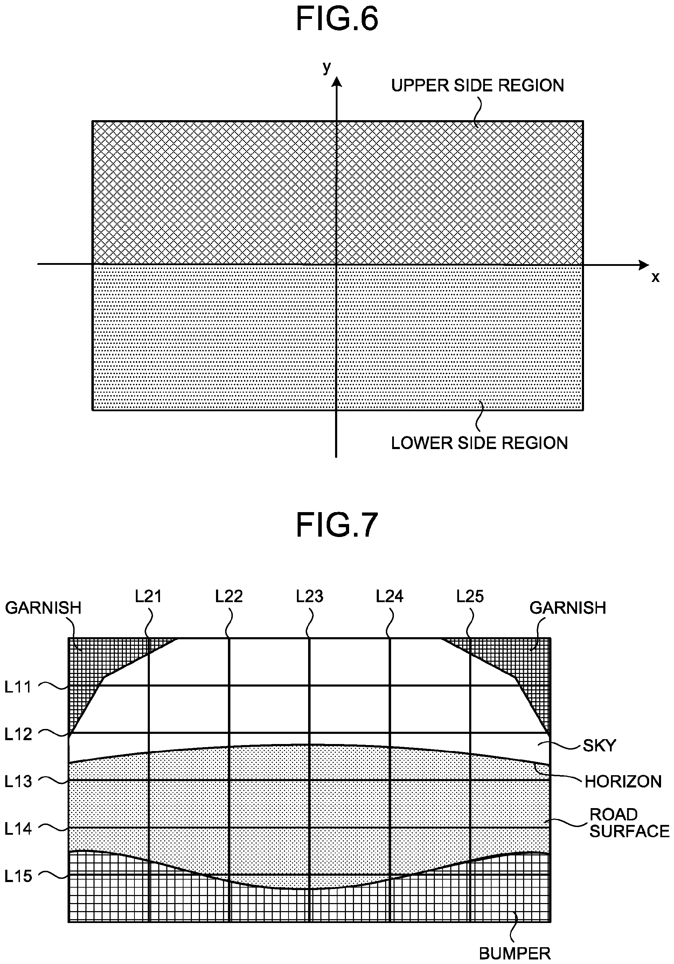

From the above circumstances, for example, it is preferable to separately process the upper side and the lower side of the image. For example, as illustrated in FIG. 6, it is assumed that the image (captured image data) is to be processed on the coordinate plane in which a predetermined reference point (in this example, the center point) is the origin, and the horizontal direction and the vertical direction relative to the captured image of the surroundings of the vehicle 1 are respectively the x-axis and the y-axis. In this case, transformation processing is performed individually by separating the image into the upper side image displaying the region above the origin in the image, and the lower side image displaying the region below the origin in the image.

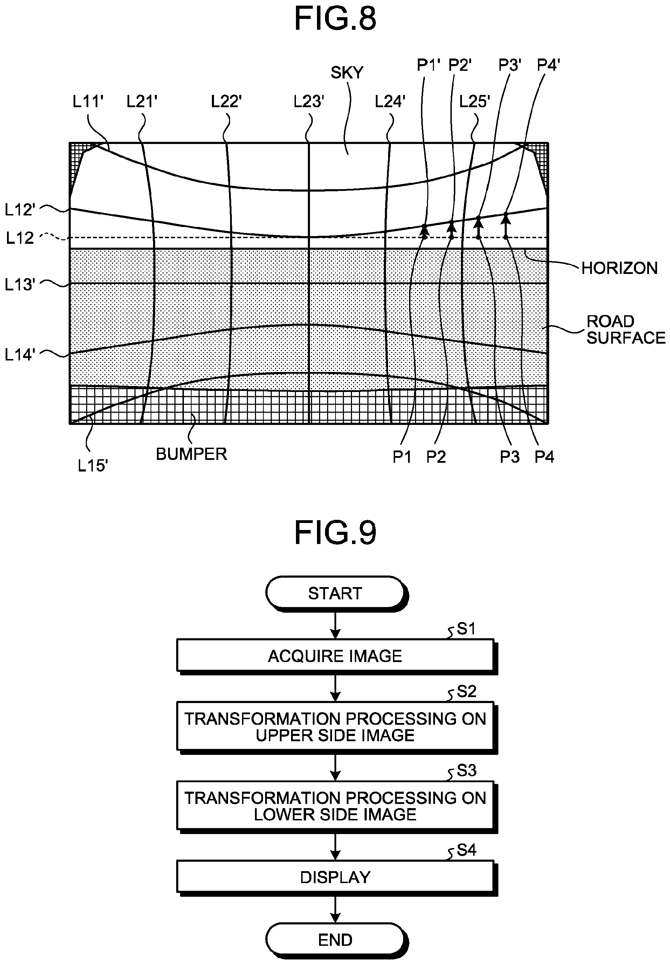

In this example, FIG. 7 is a diagram illustrating an example of an image before transformation processing is performed in the embodiment. In FIG. 7, lines L11 to L15 as well as lines L21 to L25 are used only for the purpose of explanation, and are not actually displayed. Moreover, FIG. 8 is a diagram (schematic diagram) illustrating an example of an image after the transformation processing is performed in the embodiment. In FIG. 8, lines L11' to L15', lines L21' to L25', and L12 are used only for the purpose of explanation, and are not actually displayed. Furthermore, in the example, it is assumed that the transformation processing is performed so that the images at the upper corners (right upper corner and left upper corner) are moved to the outside of the display region at a ratio greater than that of the images at the lower corners (right lower corner and left lower corner).

The upper-side image transformer 1121 performs transformation processing on the upper side image above the line L13 in FIG. 7, by moving the images at the corners (right upper corner and left upper corner) to the outside of the display region at a ratio greater than that of the images of other parts. Consequently, the upper side image above the line L13 in FIG. 7 is changed to the upper side image above the line L13' in FIG. 8. For example, when the coordinates of the pixels in the upper side image in FIG. 7 are (x1, y1), and the coordinates of the pixels in the upper side image in FIG. 8 are (x1', y1'), the pixels are moved by the following formula (1) and formula (2).

$$x1' = x1 + a \times x1 \times (y1)^b \qquad (1)$$

$$y1' = y1 + c \times y1 \times |x1|^d \qquad (2)$$

In this example, |x1| is the absolute value of x1. Moreover, a, b, c, and d are predetermined constant values of equal to or more than 0, and may be suitably set by a user on the basis of how the user desires to move the pixels. However, it is assumed that a, b, c, and d do not satisfy a = c = 0 and b = d = 0.

The lower-side image transformer 1122 performs transformation processing on the lower side image below the line L13 in FIG. 7, by moving the images at the corners (right lower corner and left lower corner) to the outside of the display region at a ratio greater than that of the images of other parts. Consequently, the lower side image below the line L13 in FIG. 7 is changed to the lower side image below the line L13' in FIG. 8. For example, when the coordinates of the pixels in the lower side image in FIG. 7 are (x2, y2), and the coordinates of the pixels in the lower side image in FIG. 8 are (x2', y2'), the pixels are moved by the following formula (3) and formula (4).

$$x2' = x2 + e \times x2 \times |y2|^f \qquad (3)$$

$$y2' = y2 + g \times y2 \times |x2|^h \qquad (4)$$

In the example, |y2| and |x2| are respectively the absolute values of y2 and x2. Moreover, e, f, g, and h are predetermined constant values of equal to or more than 0, and a user may suitably set the values on the basis how the user desires to move the pixels. However, it is assumed that e, f, g, and h do not satisfy e = g = 0 and f = h = 0.

The constant values of a to h are set so that the images at the upper corners (right upper corner and left upper corner) are moved to the outside of the display region at a ratio greater than that of the images at the lower corners (right lower corner and left lower corner).

When the transformation processing is performed as the above, the image of FIG. 7 becomes the image of FIG. 8, for example. In other words, the pixels above the lines L11 to L15 and L21 to L25 in FIG. 7 move above the lines L11' to L15' and L21' to L25' in FIG. 8. For example, points P1 to P4 on the line L12 in FIG. 7 are respectively moved to points P1' to P4' on the line L12' in FIG. 8.

As is apparent from the image in FIG. 8, the portion of the garnishes are reduced to a large extent. Moreover, the pixels above the line L13 do not move. In other words, the pixels above the line L13 and the pixels above the line L13' are the same, and the road surface portion is not reduced much. Furthermore, the lower portion of the sky is reduced less compared to that of the upper portion of the sky. Still furthermore, the bumper portion is reduced but a part of the bumper portion is still present. In this manner, it is possible to improve the appearance of the surrounding image of the vehicle 1, while retaining significant information as much as possible.

Next, an example of processing performed by the display control system 100 of the embodiment will be described. As illustrated in FIG. 9, the image acquirer 111 first acquires captured image data output from the imager 12 that captures an image of the surroundings of the vehicle 1 (step S1 : FIG. 5 and FIG. 7).

Next, the upper-side image transformer 1121 performs transformation processing on the upper side image in the captured image data so that the corner images are moved to the outside of the display region at a ratio greater than that of the images of other parts (step S2).

Next, the lower-side image transformer 1122 performs transformation processing on the lower side image in the captured image data so that the corner images are moved to the outside of the display region at a ratio greater than that of the images of other parts, and the corner images are moved to the outside of the display region at a ratio different from that of the upper side image (for example, at a ratio smaller than that of the upper side image)(step S3).

Next, the display processor 113 displays the upper side image transformed by the upper-side image transformer 1121 and the lower side image transformed by the lower-side image transformer 1122, on the display 24a (step S4 :

FIG. 8). The process ends after step S4.

In this manner, with the display control system 100 according to the present embodiment, it is possible to improve the appearance of the surrounding image of the vehicle 1 while retaining significant information as much as possible, by displaying the image in which the corner images that are likely to include a part of the vehicle body 2 are moved to the outside of the display region at a ratio greater than that of the images of other parts that are likely to include significant information.

By displaying the image in which the corner images are moved to the outside of the display region at different ratios between the upper side image and the lower side image, it is possible to flexibly correspond to a situation when the size of a part of the vehicle body 2 that the user desires to reduce from the actual image is different between the upper side image and the lower side image.

Moreover, by performing the transformation processing on the basis of formula (1) to formula (4) described above, it is possible to display an image in which the corner images are effectively moved to the outside of display region, by not just eliminating the corners of the image, but by moving the corner images to the outside of the display region while gently transforming the entire image, and preventing the changes in appearance of the image due to the transformation as much as possible.

Moreover, it is possible to display a suitable image, by displaying the image in which the corner images of the upper side image that are likely to include less significant information such as the sky and upper floors of buildings are largely moved to the outside of the display region, and the corner images of the lower side images that are likely to include significant information such as other vehicles and pedestrians on the road are not largely moved to the outside of the display region as the upper side image.

While certain embodiments have been described, these embodiments have been presented by way of example only, and are not intended to limit the scope of the invention. Indeed, the novel methods and systems described herein may be embodied in a variety of other forms; furthermore, various omissions, substitutions and changes in the form of the methods and systems described herein may be made without departing from the spirit of the invention. The accompanying claims and their equivalents are intended to cover such forms or modifications as would fall within the scope and spirit of the invention.

For example, there is no need to divide the upper side image and the lower side image into half. In the example of FIG. 5, the lower side image may be an image including the road surface and below, and the remaining image may be the upper side image. Moreover, the upper side image may be transformed but the lower side image may not be transformed at all. In this manner, it is possible to reduce the portion of the garnishes to a large extent, without changing the image of the road surface that is likely to include significant information.

A formula other than formula (1) to formula (4) described above may also be used. Moreover, the image captured by the imager 12F or the image captured by an imager that captures an image of the side of the vehicle 1 may also be used as an object. Furthermore, the display image may be displayed on a display device other than the display 24a.

According to one embodiment, a display control device (11) includes an image acquirer (111) that acquires captured image data output from an imager (12) that captures an image of a surrounding of a vehicle (1), and a display processor (113) that displays an image of the captured image data, the image being transformed so that a corner image is moved to outside of a display region at a ratio greater than that of an image of another part, on a display (24a).

**Claims**

1. A display control device (11) comprising:

   an image acquirer (111) that acquires captured image data output from an imager (12) that captures an image of a surrounding of a vehicle (1); and
   a display processor (113) that displays an image of the captured image data that is transformed so that a corner image of a display region of the captured image data is moved to outside of the display region at a ratio greater than that of an image of another part of the display region of the captured image data, on a display (24a).

2. The display control device (11) according to claim 1, wherein
   the display processor (113) displays, on the display (24a),

   an image of an upper side image of the display region of the captured image data, the upper side image being transformed so that the corner image of the display region is moved to the outside of the display region at a ratio greater than that of the image of the other part of the display region, and
   an image of a lower side image of the display region of the captured image data, the lower side image being transformed so that the corner image of the display region is moved to the outside of the display region at a ratio greater than that of the image of the other part of the display region, and the corner image of the display region is moved to the outside of the display region at a ratio different from that of the upper side image.

3. The display control device (11) according to claim 2, wherein when the captured image data is to be processed on a coordinate plane in which a predetermined reference point is an origin, and a horizontal direction and a vertical direction relative to a captured image of the surrounding of the vehicle (1) are respectively an x-axis and a y-axis, the display processor (113) displays, on the display (24a),

an image of an upper side image indicating a region above the origin in the captured image data, the upper side image being transformed so that a plurality of pixels having same y coordinate are moved in such a manner that the y coordinate moves away from the origin as an x coordinate is separated from the origin, and

an image of a lower side image indicating a region below the origin in the captured image data, the lower side image being transformed so that the pixels having the same y coordinate are moved in such a manner that the y coordinate moves away from the origin as the x coordinate is separated from the origin.

4. The display control device (11) according to claim 2 or 3, wherein the display processor (113) displays an image of the captured image data, the captured image being transformed so that the corner image of the display region of the upper side image is moved to the outside of the display region at a ratio greater than that of the corner image of the display region of the lower side image, on the display (24a).

# FIG.1

100(1)

EP 3 291 543 A1

# FIG.2

2(1)

12F(12)

12R(12)

2b

# FIG.3

2(1)

12F(12)

12R(12)

2b

3F(3)

3R(3)

# FIG.4

ECU — 11

IMAGE ACQUIRER — 111

IMAGE TRANSFORMER — 112

UPPER-SIDE IMAGE TRANSFORMER — 1121

LOWER-SIDE IMAGE TRANSFORMER — 1122

DISPLAY PROCESSOR — 113

# FIG.5

GARNISH

SKY

HORIZON

ROAD SURFACE

BUMPER

# FIG.6

UPPER SIDE REGION

y

x

LOWER SIDE REGION

# FIG.7

GARNISH    L21    L22    L23    L24    L25    GARNISH

L11

L12

SKY

HORIZON

L13

ROAD
SURFACE

L14

L15

BUMPER

# FIG.8

SKY

L11'  L21'  L22'  L23'  L24'  L25'  P1'  P2'  P3'  P4'

L12'
L12

HORIZON

L13'

ROAD
SURFACE

L14'

BUMPER

L15'  P1  P2  P3  P4

# FIG.9

START

ACQUIRE IMAGE  S1

TRANSFORMATION PROCESSING ON
UPPER SIDE IMAGE  S2

TRANSFORMATION PROCESSING ON
LOWER SIDE IMAGE  S3

DISPLAY  S4

END

Europäisches
Patentamt

European
Patent Office

Office européen
des brevets

**EUROPEAN SEARCH REPORT**

Application Number

EP 17 18 6798

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 009 590 A1 (SANYO ELECTRIC TECH CREATE CO [JP]) 31 December 2008 (2008-12-31) * abstract * * figures 2A-2C,5,6, 15 * * paragraphs [0006] - [0034] * * paragraphs [0061] - [0093] * ----- | 1-4 | INV. H04N7/18 G06T3/00 G06T5/00 H04N5/217 |
| X | US 2014/247358 A1 (TAKEDA SHOKO [JP] ET AL) 4 September 2014 (2014-09-04) * abstract * * figures 1,4 * * paragraphs [0017] - [0020] * * paragraphs [0025] - [0033] * ----- | 1-4 | |

TECHNICAL FIELDS
SEARCHED (IPC)

B60R
G06T
H04N

The present search report has been drawn up for all claims

| Place of search | Date of completion of the search | Examiner |
|---|---|---|
| The Hague | 5 January 2018 | Naci, Suphi Umut |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 18 6798

This annex lists the patent family members relating to the patent documents cited in the above-mentioned European search report.
The members are as contained in the European Patent Office EDP file on
The European Patent Office is in no way liable for these particulars which are merely given for the purpose of information.

05-01-2018

| Patent document cited in search report | | | Publication date | Patent family member(s) | | | Publication date |
|---|---|---|---|---|---|---|---|
| EP 2009590 | A1 | | 31-12-2008 | CN | 101410868 | A | 15-04-2009 |
| | | | | EP | 2009590 | A1 | 31-12-2008 |
| | | | | JP | 4104631 | B2 | 18-06-2008 |
| | | | | JP | 2007264831 | A | 11-10-2007 |
| | | | | US | 2010165104 | A1 | 01-07-2010 |
| | | | | WO | 2007111377 | A1 | 04-10-2007 |
| US 2014247358 | A1 | | 04-09-2014 | JP | 5884439 | B2 | 15-03-2016 |
| | | | | JP | 2013110712 | A | 06-06-2013 |
| | | | | US | 2014247358 | A1 | 04-09-2014 |
| | | | | WO | 2013077138 | A1 | 30-05-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008225522 A